**Europäisches Patentamt**

**European Patent Office**

**Office européen des brevets**

(19)

(11) Veröffentlichungsnummer : **0 333 992 B1**

# EUROPÄISCHE PATENTSCHRIFT

(12)

(45) Veröffentlichungstag der Patentschrift :
24.04.91 Patentblatt 91/17

(51) Int. Cl.$^5$ : **B60D 1/00**

(21) Anmeldenummer : **89101181.9**

(22) Anmeldetag : **24.01.89**

(54) Anhängevorrichtung für Fahrzeuge.

(30) Priorität : **25.03.88 DE 3810164**

(43) Veröffentlichungstag der Anmeldung :
**27.09.89 Patentblatt 89/39**

(45) Bekanntmachung des Hinweises auf die
Patenterteilung :
**24.04.91 Patentblatt 91/17**

(84) Benannte Vertragsstaaten :
**DE FR GB IT**

(56) Entgegenhaltungen :
**DE-A- 3 223 719**
**DE-A- 3 238 094**
**DE-A- 3 541 714**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Durm, Jürgen, Dipl.-Ing. FH**
**Wolf-Hirth-Strasse 4**
**W-7257 Ditzingen (DE)**

## Beschreibung

Die Erfindung bezieht sich auf eine Anhängevorrichtung für Fahrzeuge, insbesondere Personenkraftwagen, gemäß dem Oberbegriff des Anspruchs 1, wie sie z.B. durch die DE-A-32 23 719 bekannt ist.

Bei einer anderen bekannten Anhängevorrichtung (DE-A-32 38 094) wird der Kugelhals über eine Fernbedienug entriegelt. Dieser Anordnung haftet der Nachteil an, daß der ein relativ hohes Gewicht aufweisende Kugelhals nach dem Entriegeln ungehindert nach unten fällt und den Untergrund bzw. den Bodenbereich beschädigen kann, sofern er nicht durch eine zweite Person in Lage gehalten wird.

Zur Vermeidung dieses Umstandes ist es aus der DE-A 35 41 714 bekannt, an einer Anhängevorrichtung für einen Personenwagen für den lösbar befestigten Kugelhals eine Fangvorrichtung vorzusehen, so daß der Kugelhals lediglich eine definierte Fallstrecke zurücklegen kann. Diese Fangvorrichtung besteht aus einem am Aufnahmeteil angebrachten Widerhaken, der mit einem am Kugelhals vorgesehenen Hakenelement zusammenwirkt. Nachteilig an dieser Anordnung ist, daß zur Schaffung einer Fangvorrichtung insbesondere am Kugelhals, aufwendige Maßnahmen durchgeführt werden müssen, wodurch sich die Herstellungskosten wesentlich erhöhen.

Aufgabe der Erfindung ist es, eine Fangvorrichtung für eine Anhängevorrichtung zu schaffen, die bei guter Funktion und einfachem Aufbau kostengünstig herstellbar ist. Ferner soll sichergestellt werden, daß man nicht versehentlich einen Anhänger an den unverriegelten Kugelhals anhängen oder gar in dieser Stellung wegfahren kann.

Erfindungsgemäß wird diese Aufgabe durch die kennzeichnenden Merkmale des Anspruchs 1 gelöst. Zweckmäßige Ausgestaltungen der Erfindung sind in den Unteransprüchen enthalten.

Die mit der Erfindung hauptsächlich erzielten Vorteile sind darin zu sehen, daß die lediglich aus einem zusätzlichen Fanghaken und den ohnehin am Kugelhals vorhandenen, querverlaufenden Bolzen bestehende Fangvorrichtung im Aufbau einfach ist und geringe Herstellungskosten beansprucht. Durch die schwenkbare Ausbildung des Unterteils des Fanghakens wird sichergestellt, daß bei entriegeltem Kugelhals kein Anhänger an diesen angekoppelt werden kann, da sonst der Kugelhals mit dem Anhänger nach unten hin abkippt. Der Fanghaken stellt ein einfach herzustellendes und leicht zu montierendes Bauteil dar. Durch die Hakenabschnitte am Unterteil des Fanghakens wird der beim Entriegeln herabfallende Kugelhals sicher aufgenommen, bevor er Bodenkontakt hat.

Ein Ausführungsbeispiel der Erfindung ist in der Zeichnung dargestellt und wird im folgenden näher erläutert. Es zeigt

Fig. 1 eine Seitenansicht auf eine Anhängevorrichtung mit der erfindungsgemäßen Fangvorrichtung,

Fig. 2 eine Ansicht entsprechend Fig. 1, wobei sich das Unterteil der Fangvorrichtung in seiner verschwenkten Lage befindet,

Fig. 3 eine Ansicht in Pfeilrichtung R der Fig. 1,

Fig. 4 eine Ansicht in Pfeilrichtung S der Fig. 1.

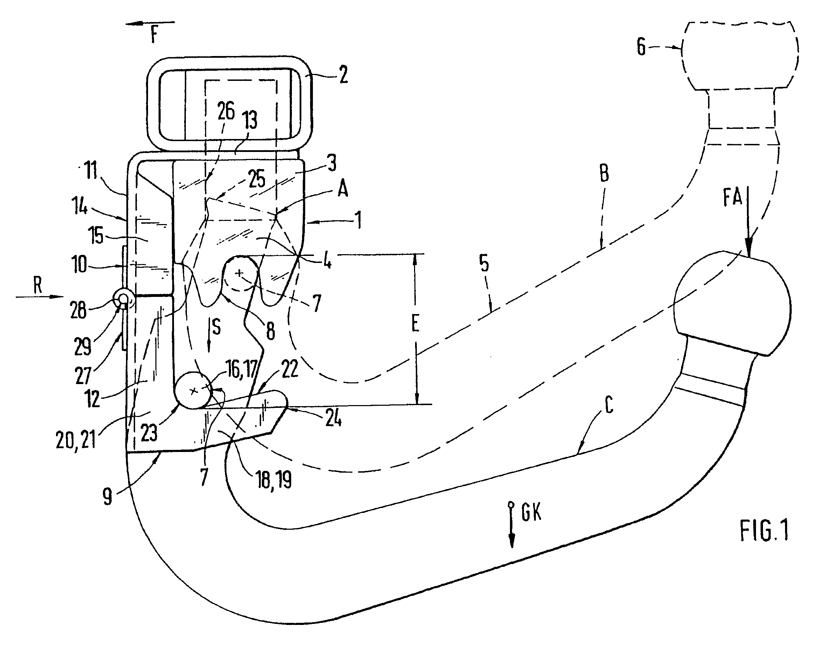

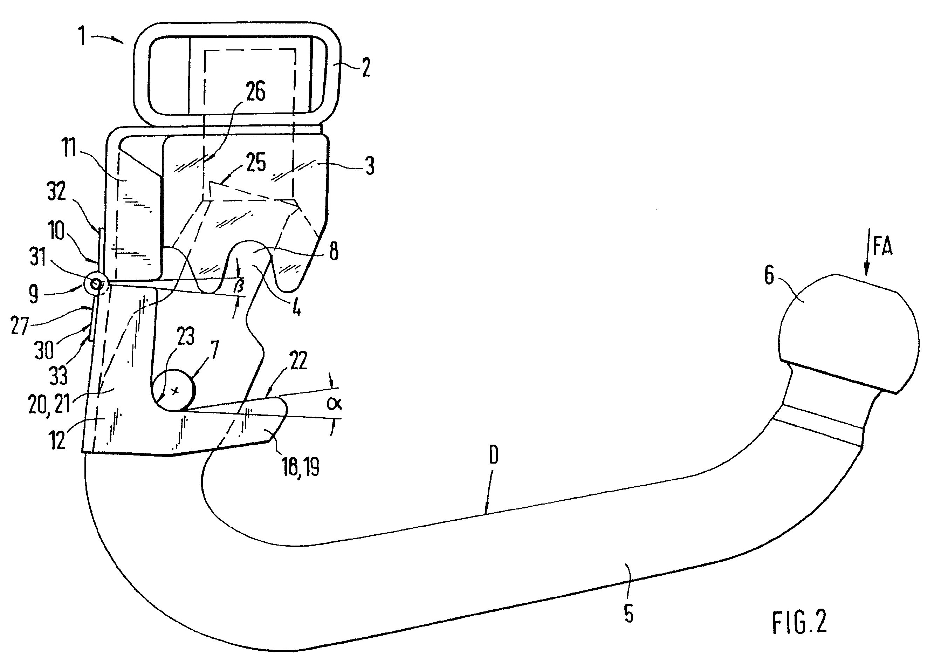

Nach den Fig. 1 und 2 ist am Heck eines nicht gezeigten Personenwagens eine Anhängevorrichtung 1 vorgesehen, die einen im Querschnitt als Vierkantrohr ausgebildeten Querträger 2 umfaßt, an dem ein Aufnahmeteil 3 für das Endteil 4 eines Kugelhalses 5 mit Kupplungskugel 6 befestigt ist.

Zur Verdrehsicherung des Kugelhalses 5 dient ein am vertikal ausgerichteten Endteil 4 vorgesehener, querverlaufender Bolzen 7, der durch den Kugelhals 5 hindurchgeführt ist und diesen beiderseits überragt. Bei arretierter Anhängevorrichtung 1 greift der Bolzen 7 in eine korrespondierend ausgebildete Nut 8 am Aufnahmeteil 3 ein. Zur lösbaren Befestigung des Endteiles 4 des Kugelhalses 5 am Aufnahmeteil 3 ist ein nicht näher dargestellter Verriegelungsmechanismus vorgesehen, der mit einer Fernbedieneinrichtung zusammenwirkt. Eine derartige Anordnung ist beispielsweise in der DE-OS 32 38 094 näher beschrieben.

Damit der ein relativ hohes Gewicht aufweisende Kugelhals 5 nach dem Entriegeln nur eine definierte Fallstrecke E zurücklegen kann, ist an der Anhängevorrichtung 1 unterhalb des Aufnahmeteiles 3 eine Fangvorrichtung 9 für den Kugelhals 5 vorgesehen. Die Fangvorrichtung 9 setzt sich aus dem den Kugelhals 5 durchsetzenden, querverlaufenden Bolzen 7 und einem, an einem feststehenden Teil der Anhängevorrichtung 1 in Lage gehaltenen Fanghaken 10 zusammen. Der Fanghaken 10 besteht aus einem winkelförmigen Oberteil 11 und einem ebenfalls winkelförmig ausgebildeten Unterteil 12, wobei das Unterteil 12 gegenüber dem Oberteil 11 in definierter Weise (Winkel β) verschwenkbar ist. Ein endseitiger, horizontaler Steg 13 des Oberteiles 11 ist an der Unterseite des Querträgers 2 befestigt. Gemäß Fig. 1 ist der Steg 13 zwischen Querträger 2 und dem darunterliegenden Aufnahmeteil 3 eingespannt und zusätzlich mittels Schrauben befestigt. Der vertikal verlaufende Abschnitt 14 des Oberteiles 11 ist U-förmig profiliert, wobei die freien Enden der beabstandeten Schenkel 15 entgegen der Fahrtrichtung F zeigen. Die Schenkel 15 sind in Querrichtung soweit voneinander entfernt, daß zwischen ihnen der Kugelhals 5 aufgenommen werden kann.

Das Unterteil 12 ist ebenfalls U-förmig profiliert und weist die gleiche Breite auf wie das Oberteil 11. Die vorstehenden Abschnitte 16, 17 des Bolzens 7 stützen sich bei entriegeltem Kugelhals 5 an Hakenabschnitte 18, 19 des Unterteiles 12 ab, wobei der Bolzen 7 die Hakenabschnitte 18, 19 beidseitig überragt (Fig. 1, 2 und 4). Die Hakenabschnitte 18, 19 sind vom unteren Rand der in Fahrzeuglängsrichtung verlaufenden Schenkel 20, 21 des Unterteils 12 weggeführt, wobei eine mit dem Bolzen 7 zusammenwirkende obere Begrenzungskante 22 der Hakenabschnitte 18, 19 von einem radienförmigen Übergangsbereich 23 schräg nach oben hin unter einem spitzen Winkel α ansteigt.

Die freien Ende 24 der Hakenabschnitte 18, 19 weisen einen gerundete Formverlauf auf. Die Lage der oberen Begrenzungskante 22 bzw. des radienförmigen Übergangsbereiches 23 ist in Höhenrichtung gesehen, so gewählt, daß sich bei entriegeltem und abgesenktem Kugelhals ein oberer Rand 25 des Endteiles 4 an einem zylindrischen Bereich 26 des Aufnahmeteiles 3 abstützt (Fig. 1).

In dieser Lage des Kugelhalses 5 ist der aufrechte Abschnitt des Unterteiles 12 parallel zum darüberliegenden Oberteil 11 ausgerichtet (Fig. 1).

Das Unterteil 12 wirkt mit einem Federelement 27 in der Weise zusammen, daß das Unterteil 12 lediglich beim Auftreten einer nach unten gerichteten, definierten Axialkraft FA am Kupplungskopf 6 im Uhrzeigersinn (in Richtung Heck) um einen Winkel β verschwenkbar ist. Diese Stellung D des Kugelhalses ist in Fig. 2 dargestellt. Allein durch das Gewicht des Kugelhalses GK wird das Unterteil 12 jedoch nicht verschwenkt.

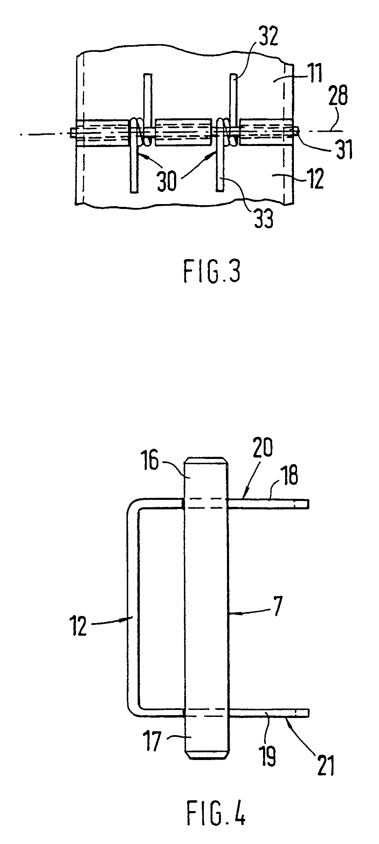

Das Unterteil 12 ist um eine etwa horizontal verlaufende, sich in Fahrzeugquerrichtung erstreckende Querachse 28 gegenüber dem Oberteil 11 verschwenkbar. Gemäß Fig. 1 ist zur gelenkigen Verbindung von Oberteil 11 und Unterteil 12 ein Scharnier 29 vorgesehen, das auf der dem Kugelhals 5 abgekehrten Seite des Fanghakens 10 vorgesehen ist. Das Federelement 27 ist entsprechend Fig. 3 als Schenkelfeder 30 ausgebildet, die abschnittsweise einen Scharnierstift 31 umgibt, wobei sich die freien langgestreckten Enden 32, 33 der Schenkelfeder 30 einerseits am Oberteil 11 und andererseits am Unterteil 12 abstützen. Die Enden 32, 33 erstrecken sich in vertikaler Richtung.

Die gelenkige Verbindung zwischen Oberteil 11 und Unterteil 12 und das Federelement 27 kann selbstverständlich auch eine andere konstruktive Gestaltung aufweisen. Wesentlich ist nur, daß das Unterteil gegenüber dem Oberteil verschwenkbar bzw. auslenkbar ist.

Die Drehachse 28 verläuft in einem unteren Bereich des Aufnahmeteiles 3. Damit bei abgesenktem Kugelhals 5 kein Anhänger an die Kupplungskugel 6 angehängt werden kann, ohne daß es bemerkt wird, verschwenkt das Unterteil 12 der Fangvorrichtung beim Auftreten einer nach unten gerichteten Axialkraft FA auf die Kupplungskugel 6 im Uhrzeigersinn um den Winkel β und der Kugelhals 5 gleitet vom Widerlagepunkt A nach unten ab und fällt aus dem Aufnahmeteil 3 heraus. Nach dem Lösen des Verriegelungsmechanismus fällt der Kugelhals 5 von einer gestrichelt dargestellten Betriebsstellung B um einen definierten Weg E nach unten in eine abgesenkte Stellung C, die durch die Fangvorrichtung 9 festgelegt ist.

## Ansprüche

1. Anhängevorrichtung für Fahrzeuge, insbesondere Personenkraftwagen, die einen am Heck des Fahrzeuges angebrachten Querträger (2) mit einem Aufnahmeteil (3) für die lösbare Halterung eines Kugelhalses (5) mit Kupplungskugel (6) umfaßt, wobei ein Endteil (4) des Kugelhalses (5) von unten in das Aufnahmeteil eingesetzt und mittels eines Verriegelungsmechanismus in einer Betriebstellung (B) verdrehfest gehalten ist und daß am Kugelhals ein sich in Fahrzeugquerrichtung erstreckender, den Kugelhals (5) beidseitig überragender Bolzen (7) angeordnet ist, dadurch gekennzeichnet, daß eine Fangvorrichtung (9) für den Kugelhals (5) vorgesehen ist, die aus dem den Kugelhals (5) durchsetzenden Bolzen (7) und einem, an einem feststehenden Teil der Anhängevorrichtung (1) in Lage gehaltenen Fanghaken (10) gebildet wird, der aus einem feststehenden Oberteil (11) und einem mit diesem verbundenen, verschwenkbaren Unterteil (12) besteht, wobei das mit einem Federelement (27) zusammenwirkende Unterteil (12) Hakenabschnitte (18, 19) zur Aufnahme der vorstehenden Abschnitte (16, 17) des darüberliegenden Bolzens (7) aufweist, wobei bei verriegeltem Kugelhals (5) der Bolzen (7) mit vertikalem Abstand (E) zu den darunterliegenden Hakenabschnitten (18, 19) des Fanghakens (10) verläuft.

2. Anhängevorrichtung nach Anspruch 1, dadurch gekennzeichnet, daß das Unterteil (12) um eine etwa horizontal verlaufende, sich in Fahrzeugquerrichtung erstreckende Drehachse (28) gegenüber dem Oberteil (11) bewegbar ist.

3. Anhängevorrichtung nach Anspruch 1, dadurch gekennzeichnet, daß das Federelement (27) derart ausgebildet ist, daß das Unterteil (12) beim Herabfallen des Kugelhalses (5) etwa in seiner parallel zum Oberteil (11) ausgerichteten Stellung verbleibt, wogegen beim Auftreten einer nach unten gerichteten Vertikalkraft ($F_A$) auf die Kupplungskugel (6) das Unterteil (12) selbsttätig zum Heck hin verschwenkt wird, so daß der Kugelhals (5) vollständig außer Eingriff mit dem Aufnahmeteil (3) gelangt und nach unten hin abkippt.

4. Anhängevorrichtung nach Anspruch 1, dadurch gekennzeichnet, daß die Hakenabschnitte (18, 19) vom unteren Rand des Unterteils (12) weggeführt sind, wobei eine mit dem Bolzen (7) zusammenwirkende, obere Begrenzungskante (22) der Hakenabschnitte (18, 19) schräg nach oben hin unter einem spitzen Winkel (α) ansteigt.

5. Anhängevorrichtung nach Anspruch 1, dadurch gekennzeichnet, daß das Oberteil (11) des Fanghakens (10) am Querträger (2) der Anhängevorrichtung (1) befestigt ist.

6. Anhängevorrichtung nach Anspruch 1, dadurch gekennzeichnet, daß das Federelement (27) durch eine Schenkelfeder (30) gebildet wird.

7. Anhängevorrichtung nach Anspruch 1, dadurch gekennzeichnet, daß Oberteil (11) und Unterteil (12) des Fanghakens (10) über ein Scharnier (29) miteinander verbunden sind.

8. Anhängevorrichtung nach Anspruch 1, dadurch gekennzeichnet, daß die Drehachse (28) des Scharniers (29) etwa im Bereich des unteren Randes des Aufnahmeteiles (3) verläuft.

9. Anhängevorrichtung nach Anspruch 1, dadurch gekennzeichnet, daß das Oberteil (11) und das Unterteil (12) zumindest abschnittsweise profiliert sind.

## Claims

1. A trailer coupling for vehicles, in particular passenger cars, comprising a cross member (2) mounted at the rear of the vehicle and with a receiving part (3) for the releasable mounting of a neck-shaped bar (5) with a coupling ball (6), one end portion (4) of the neck-shaped ball bar (5) being inserted from below into the receiving part and being held rotationally rigid in one operating position (B) by means of a locking mechanism, and a pin (7) extending in the transverse direction of the vehicle and projecting beyond the neck-shaped ball bar (5) on both sides is arranged on the neck-shaped ball bar, characterized in that the neckshaped ball bar (5) is provided with a catch device (9) formed by a pin (7) passing through the neck-shaped ball bar (5) and by a catch hook (10) held in position on a fixed part of the trailer coupling (1) and comprising a fixed upper part (11) and a pivotable lower part (12) connected thereto, the lower part (12) which cooperates with a spring element (27) comprising hook portions (18, 19) for receiving the projecting portions (16, 17) of the pin (7) situated thereover, and the pin (7) extending at a vertical distance (E) from the hook portions (18, 19) of the catching hook (10) situated thereunder when the neck-shaped ball bar (5) is locked.

2. A trailer coupling according to Claim 1, characterized in that the lower part (12) is movable relative to the upper part (11) about an axis of rotation (28) extending substantially horizontally in the transverse direction of the vehicle.

3. A trailer coupling according to Claim 1, characterized in that the spring element (27) is constructed in such a way that, when the neck-shaped ball bar (5) drops, the lower part (12) remains substantially in its position orientated parallel to the upper part (11), whereas when a downwardly orientated vertical force

($F_A$) is exerted upon the coupling ball (6) the lower part is pivoted automatically towards the rear, so that the neckshaped ball bar (5) disengages completely from the receiving means (3) and tilts downwards.

4. A trailor coupling according to Claim 1, characterized in that the hook portions (18, 19) extend away from the lower edge of the lower part (12), an upper boundary edge (22) of the hook portions (18, 19) which cooperates with the pin (7) rising obliquely upwards at an acute angle ($\alpha$).

5. A trailer coupling according to Claim 1, characterized in that the upper part (11) of the catch hook (10) is secured to the cross member (2) of the trailer coupling (1).

6. A trailer coupling according to Claim 1, characterized in that the spring element (27) is formed by a torsion spring (30).

7. A trailer coupling according to Claim 1, characterized in that the upper part (11) and the lower part (12) of the catch hook (10) are connected together by way of a hinge (29).

8. A trailer coupling according to Claim 1, characterized in that the axis of rotation (28) of the hinge (29) extends substantially in the region of the lower edge of the receiving part (3).

9. A trailer coupling according to Claim 1, characterized in that the upper part (11) and the lower part (12) are profiled at least in part.

## Revendications

1. Système de remorquage pour véhicule automobile, en particulier pour des véhicules de tourisme, qui comprend une traverse (2) rapportée à l'arrière du véhicule, avec une pièce de logement (3) pour la fixation amovible d'une tige porte-boule (5) munie d'une boule d'attelage (6), une partie d'extrémité (4) de la tige porte-boule (5) pénétrant depuis le bas dans le logement (3) et se trouvant maintenue de façon fixe en rotation, dans une position d'utilisation B, par un mécanisme de verrouillage, une goupille (7) s'étendant dans le sens transversal du véhicule et dépassant des deux côtés de la tige porte-boule (5) étant disposée sur la tige, caractérisé en ce qu'on prévoit un dispositif d'arrêt (9) de la tige porte-boule (5), qui est formé par la goupille (7) traversant la tige porteboule (5) et un crochet de blocage (10) maintenu en place sur une partie fixe du système de remorquage (1), qui se compose d'une partie supérieure fixe (11) et d'une partie inférieure (12) pivotante liée à cette dernière, la partie inférieure (12) coopérant avec un élément élastique (27) présentant des sections en crochet (18, 19) pour la réception des sections en saillie (16, 17) de la goupille (7) se trouvant au-dessus, la goupille (7) s'étendant avec un intervalle vertical (E) par rapport aux sections à crochet (18, 19) se trouvant en dessous du crochet d'arrêt (10) lorsque la tige porte-boule d'attelage (5) est verrouillée.

2. Système de remorquage selon la revendication 1, caractérisé en ce que, la partie inférieure (12) peut se déplacer, par rapport à la partie supérieure (11), autour d'un axe de rotation (28) s'étendant à peu près horizontalement transversalement au véhicule.

3. Système de remorquage selon la revendication 1, caractérisé en ce que l'élément élastique (27) est formé de telle sorte que la partie inférieure (12), lors de la chute de la tige porte-boule (5), reste à peu près dans sa position parallèle à la partie supérieure (11), tandis qu'au contraire lors de l'apparition d'un effort vertical (FA) dirigé vers le bas, s'exerçant sur la boule de remorquage (6), la partie inférieure (12) pivote automatiquement vers l'arrière, de sorte que la tige porteboule d'attelage (5) vient totalement hors de prise avec le logement (3) et bascule vers le bas.

4. Système de remorquage selon la revendication 1, caractérisé en ce que les sections en crochet (18, 19) s'écartent de la bordure inférieure de la partie inférieure (12), une arête de limitation supérieure (22) des sections de crochet (18, 19) coopérant avec la goupille (7) s'élève obliquement vers le haut sous un angle aigu (α).

5. Système de remorquage selon la revendication 1, caractérisé en ce que la partie supérieure (11) du crochet d'arrêt (10) est fixée sur la traverse (2) du système de remorquage (1).

6. Système de remorquage selon la revendication 1, caractérisé en ce que l'élément élastique (27) est formé par un ressort à branches (30).

7. Système de remorquage selon la revendication 1, caractérisé en ce que la partie supérieure (11) et la partie inférieure (12) du crochet d'arrêt (10) sont réunies par une charnière (29).

8. Système de remorquage selon la revendication 1, caractérisé en ce que l'axe de rotation (28) de la charnière (29) s'étend à peu près dans la zone de la bordure inférieure du logement (3).

9. Système de remorquage selon la revendication 1, caractérisé en ce que la partie supérieure (11) et la partie inférieure (12) sont au moins partiellement profilées.

FIG.1

EP 0 333 992 B1

FIG.2

EP 0 333 992 B1

FIG.3

FIG.4